# EUROPÄISCHE PATENTSCHRIFT

(11) **EP 3 628 845 B1**
(45) Veröffentlichungstag und Bekanntmachung des Hinweises auf die Patenterteilung: **06.09.2023**
(21) Anmeldenummer: 19199023.3
(22) Anmeldetag: 23.09.2019
(51) Int. Cl.: F02C 7/228, F02C 9/34

(54) **VERFAHREN ZUM BETREIBEN EINER GASTURBINENANORDNUNG UND GASTURBINENANORDNUNG**
GAS TURBINE ASSEMBLY AND METHOD FOR OPERATING SAME
PROCÉDÉ DE FONCTIONNEMENT D'UN AGENCEMENT DE TURBINE À GAZ ET AGENCEMENT DE TURBINE À GAZ

(30) Priorität: 26.09.2018 DE 102018123785
(43) Veröffentlichungstag der Anmeldung: 01.04.2020
(73) Patentinhaber: Deutsches Zentrum für Luft- und Raumfahrt e.V., 51147 Köln (DE)
(72) Erfinder: ZORNEK, Timo, 70565 Stuttgart (DE)
(74) Vertreter: Fleck, Julia Maria

(56) Entgegenhaltungen:
- DE-A1- 10 032 471
- DE-T5-112015 002 424
- US-A- 4 949 538
- US-A- 5 311 742
- US-A1- 2006 016 198
- US-A1- 2013 055 719

## Beschreibung

Die Erfindung betrifft ein Verfahren zum Betreiben einer Mikrogasturbinenanordnung, bei dem Brennstoff in Form von Brenngas einem Brennkammersystem über einen Brennstoffversorgungsstrang zugeführt wird, wobei der Brennstoffstrom in einem brennerspezifischen Abschnitt auf zwei Leitungsabschnitte zur getrennten Brennstoffversorgung einer Hauptstufe und einer Pilotstufe des Brennkammersystems aufgeteilt wird, wobei nach Aufteilung der Brennstoff durch zumindest ein in dem brennerspezifischen Abschnitt angeordnetes Querschnittsreduktionsmittel strömt. Ferner betrifft die Erfindung eine Mikrogasturbinenanordnung.

In jüngster Zeit wächst das Interesse an der energetischen Nutzung diverser Brennstoffe aus unterschiedlichen Brennstoffquellen, wie z. B. Synthesegas aus Biomassevergasung, Klärgas, Deponiegas, Biogas, Grubengas oder Erdölbegleitgas. Für die Nutzung derartiger Brenngase unter dezentraler Energieerzeugung, beispielsweise in Form von Kraft-Wärme-Kopplung, eignen sich z. B. Mikrogasturbinenanordnungen, die einen Leistungsbereich von 1 MW oder kleiner bedienen können.

Einige dieser Brenngase weisen im Vergleich zu Erdgas als konventionellem Brennstoff bzw. Brenngas einen sehr niedrigen Heizwert auf. So kann der Heizwert von Synthesegas aus Biomassevergasung, als Beispiel eines "niederkalorischen" Brenngases, nur etwa ein Zehntel des Heizwertes von Erdgas betragen, das demgegenüber ein "hochkalorisches" Brenngas darstellt. Beim Betrieb der Mikrogasturbinenanordnung kann es aufgrund des geänderten Heizwertes zu einer Änderung des Betriebsverhaltens des Brennkammersystems in der Mikrogasturbinenanordnung aufgrund des sich ändernden Brennstoffmassenstroms kommen, insbesondere zu einer Destabilisierung des Verbrennungsbetriebs.

Bei bekannten Brennkammersystemen kommt zur Stabilisierung des Verbrennungsbetriebs neben einer Hauptstufe häufig eine Pilotstufe zum Einsatz. Ein derartiges Brennkammersystem und dessen Brennstoffeinbringungssystem, sowie ein Verfahren zum Betreiben des Brennkammersystems, von dem auch die vorliegende Erfindung ausgeht, sind beispielsweise aus der WO 01/83965 A1 bekannt.

Die US 4 949 538 A zeigt einen Brenner für ein Gasturbinensystem mit einer Brennstoffzuleitung, die aufgeteilt ist zur Versorgung von primären Brennstoffdüsen und einer sekundären Brennstoffdüse. Zur koordinierten Aufteilung des Brennstoffstroms auf die Düsen ist eine Ventilanordnung vorhanden. Die Anordnung umfasst Aufteilventile, deren Stellungen miteinander koordiniert sind.

In der US 5 311 742 A ist eine Gasturbinenanlage gezeigt, bei der eine Brennstoffversorgung für ein Brennkammersystem einen Haupt-Brennstoffpfad zur Versorgung eines vorgemischt betriebenen Brennersystems und mehrere Unter-Brennstoffpfade zur Versorgung eines Diffusions-Brennersystems umfasst. In den jeweiligen Pfaden sind Verteilerventile angeordnet.

Gemäß der DE 11 2015 002 424 T5 weist eine Gasturbinenanlage ein Brennersystem auf, wobei Strömungsregulierungsventile jeweils zweier Hauptbrennstoffsysteme gekoppelt miteinander gesteuert werden können. Weitere Gasturbinensysteme sind in der US 2006/0016198 A1 und in der US 2013/055 719 A1 offenbart.

In der DE 100 32 471 A1 ist ein Brennstoffeinspritzsystem eines Fluggasturbinen-Triebwerks angegeben, bei dem die Aufteilung eines Kraftstoffes auf einen Pilot- und einen Hauptbrenner als Funktion einer Temperatur stromab einer Hochdruckturbine erfolgen kann. Der Erfindung liegt die Aufgabe zugrunde, ein Verfahren zum Betreiben einer Mikrogasturbinenanordnung sowie eine Mikrogasturbinenanordnung bereitzustellen, das bzw. die im Betrieb mit niederkalorischen Brennstoffen bzw. Brenngasen einen stabilen Betrieb mit vergleichsweise hoher Effizienz gewährleistet.

Die Aufgabe wird für das Verfahren mit den Merkmalen des Anspruchs 1 und für die Mikrogasturbinenanordnung mit den Merkmalen des Anspruchs 9 gelöst.

Bei dem Verfahren ist vorgesehen, dass der Brennstoffstrom, d.h. der Massen- bzw. Volumenstrom an Brennstoff, stromauf des Brennkammersystems mittels einer Verdichtervorrichtung einer Verdichtereinheit auf einen Versorgungsdruck verdichtet wird. Stromab der Verdichtereinheit wird der Brennstoffstrom über den Leitungsabschnitt der Pilotstufe (kurz "Brennstoffstrom der Pilotstufe") mittels des zumindest einen Querschnittsreduktionsmittels in Abhängigkeit des Brennstoffstroms über den Leitungsabschnitt der Hauptstufe (kurz "Brennstoffstrom der Hauptstufe"), bzw. in Abhängigkeit des Gesamtbrennstoffstroms, der damit im Zusammenhang steht, gesteuert oder geregelt. Anstelle des Brennstoffstroms kann auch eine dazu proportionale Größe, z. B. eine Öffnungsstellung des / der Querschnittsreduktionsmittel, verwendet werden.

Dadurch können vorteilhaft Änderungen in der Brennstoffqualität bei der Steuerung oder Regelung des Brennstoffstroms der Pilotstufe automatisch mit der Steuerung oder Regelung des Brennstoffstroms der Hauptstufe berücksichtigt werden. Änderungen in der Brennstoffqualität, insbesondere des Heizwertes, werden bei dem Brennstoffstrom über die Hauptstufe durch die dort angewandte Regelung z. B. auf eine konstante Turbinenaustrittstemperatur berücksichtigt. Sinkt der Heizwert bei Umstellung eines Betriebs mit Erdgas auf einen Betrieb mit Synthesegas, beispielsweise bis zu einem Faktor 10, wird ein höherer Brennstoffstrom eingeregelt, um die Turbinenaustrittstemperatur konstant zu halten. Wird der Brennstoffstrom der Pilotstufe, wie im Stand der Technik üblich, unabhängig von dem Brennstoffstrom der Hauptstufe gesteuert oder geregelt, erfolgt hierbei zunächst keine Anpassung des Brennstoffstroms. Dies führt zu einer Abmagerung (einem Anstieg der Luftzahl) der Verbrennung in der Pilotstufe, die zu Instabilitäten bis hin zu einem Verlöschen des Pilotbrenners führen kann. Durch die Kopplung der Steuerung/Regelung des Brennstoffstroms des Pilotbrenners an den der Hauptstufe kann auf einfache Weise auch hier der Brennstoffstrom bei Änderung der Brennstoffqualität angepasst werden. Dies trägt zu einem stabilen Betrieb der Pilotstufe und damit des Brennkammersystems bzw. der Gasturbinenanordnung auch bei wechselnden Brennstoffqualitäten bei.

Mit einfacher und effektiver Steuerung oder Regelung wird der Brennstoffstrom über den Leitungsabschnitt der Pilotstufe in Abhängigkeit eines vorgegebenen Verhältnisses zu dem Brennstoffstrom über den Leitungsabschnitt der Hauptstufe (oder zu dem Gesamtbrennstoffstrom, d. h. der Summe aus dem Brennstoffstrom der Pilotstufe und der Hauptstufe) gesteuert bzw. geregelt.

Eine gute Abstimmung der Steuerung bzw. Regelung auf unterschiedliche Betriebsbedingungen wird dadurch erreicht, dass zur Steuerung oder Regelung des Brennstoffstroms das Verhältnis des Brennstoffstroms der Pilotstufe zu dem Brennstoffstrom der Hauptstufe (oder dazu proportionaler Größe/n) in einer Ermittlungseinheit zumindest in Anhängigkeit einer Turbinenaustrittstemperatur stromab einer Turbinenanordnung der Mikrogasturbinenanordnung und einer Turbinendrehzahl der Turbinenanordnung ermittelt wird und dass anschließend unter Einbeziehung des Verhältnisses eine Öffnungsstellung (z. B. eine Ventilstellung oder Drosselklappenstellung) des/der Querschnittreduktionsmittel/s (oder dazu proportionale/n Größe/n) in der Ermittlungseinheit ermittelt und dem Querschnittreduktionsmittel vorgegeben wird. Zur Ermittlung der Öffnungsstellung wird zudem zweckmäßigerweise der einzuregelnde Brennstoffstrom der Hauptstufe (oder eine dazu proportionale Größe, z. B. eine Ventilstellung) als Eingangsgröße einbezogen. Die Turbinenaustrittstemperatur und die Turbinendrehzahl bilden Eingangsgrößen der Ermittlungseinheit und liefern (indirekt, z. B. über eine Kennlinie) Informationen über den Betriebsdruck in dem Brennkammersystem der Gasturbinenanordnung und über die aktuelle Leistung. In Abhängigkeit dieser Größen, d. h. eines Betriebspunktes, können verschiedene Verhältnisse in der Ermittlungseinheit, z. B. tabellarisch, hinterlegt sein und daraus ermittelt werden. Unterschiedliche vorteilhafte Verhältnisse in Abhängigkeit der Betriebsbedingungen (beispielsweise unterschiedlich für Volllast- und Teillastbetrieb) lassen sich z. B. durch Vorversuche ermitteln. Denkbar wäre auch die Hinterlegung eines festen Verhältnisses.

In einer besonders effizienten Verfahrensvariante, insbesondere bei Betrieb mit niederkalorischen Brennstoffen, kann vorgesehen sein, dass der Brennstoff in der Verdichtereinheit durch eine drehzahlregelbare Verdichtervorrichtung verdichtet wird und dass der Gesamtbrennstoffstrom über die Variation der Drehzahl gesteuert oder geregelt wird. Die Verdichtervorrichtung ist für eine kompakte Bauweise, wie sie insbesondere bei Mikrogasturbinen häufig erwünscht ist, als Radialverdichter ausgeführt und elektrisch angetrieben. Denkbar ist auch ein Antrieb über ein Getriebe gekoppelt mit der Welle der Gasturbinenanordnung oder ein Antrieb über einen Teilstrom des Abgases der Gasturbinenanordnung nach dem Prinzip eines Turboladers. Vorteilhaft ist von der Verdichtervorrichtung lediglich ein derartiger Förderdruck zu erzeugen, wie es für die Einbringung des Brennstoffes in das Brennkammersystem an einem jeweiligen Betriebspunkt erforderlich ist, was die Effizienz des Gesamtsystems, d.h. der Mikrogasturbinenanordnung, steigert. Insbesondere macht sich dies bei dem Betrieb mit niederkalorischen Brenngasen bemerkbar, deren Verdichtung aufgrund des hohen Volumenstroms eine vergleichsweise hohe Verdichterleistung erfordert. Dabei kann ein Rückführleitungsmittel mit einem Querschnittsreduktionsmittel, insbesondere einer Drosselklappe, zur Rückführung eines Teils des geförderten Brennstoffstroms vorhanden sein, um eine genauere Steuerung bzw. Regelung bei geringen Brennstoffströmen und/oder zur Absenkung des minimal möglichen lieferbaren Brennstoffstroms zu bewirken.

Insbesondere in Kombination mit der drehzahlregelbaren Ausbildung der Verdichtervorrichtung ist es vorteilhaft, wenn der Brennstoff in dem brennerspezifischen Abschnitt lediglich in einem der Leitungsabschnitte durch das Querschnittsreduktionsmittel, insbesondere in Ausbildung einer Drosselvorrichtung, geleitet wird. In dem/den anderen Leitungsabschnitt/en sind vorzugsweise keine Querschnittsreduktionsmittel vorhanden. Durch das Vorhandensein z. B. nur eines Querschnittsreduktionsmittels, insbesondere in Ausbildung einer Drosselvorrichtung, ergibt sich in dem brennerspezifischen Abschnitt ein geringer Druckverlust verglichen zu einer Ausbildung mit einem oder mehreren Ventilmitteln beispielsweise in Ausbildung als Proportionalventile. So ergibt sich ein geringerer bereitzustellender Förderdruck, was ebenfalls der Effizienzsteigerung des Gesamtsystems dient. Zudem lässt sich eine kompaktere Verdichtervorrichtung verwenden, die z. B. in die Mikrogasturbinenanordnung integrierbar sein kann.

Vorzugsweise wird das Verhältnis durch Steuerung oder Regelung des Querschnittsreduktionsmittels unter Einbeziehung der Drehzahl der Verdichtervorrichtung (und gegebenenfalls dem über die Rückführleitung zurückgeführten Anteil des Brennstoffstroms) gesteuert oder geregelt. Zudem können vorteilhaft die Ventilcharakteristika (insbesondere der Durchflusskoeffizient) des Querschnittsreduktionsmittels einbezogen werden, die herstellerseitig z. B. durch Kalibiermessungen ermittelt und angegeben werden. In Zusammenhang mit der Turbinenaustrittstemperatur und der Drehzahl der Turbinenanordnung kann so z. B. über eine Kennlinie der Gesamtbrennstoffstrom ermittelt werden, vorteilhaft ohne eine direkte Messung des Massen- bzw. Volumendurchflusses. Dies ermöglicht indirekt Rückschlüsse auf die Brennstoffqualität.

In einer bevorzugten Verfahrensvariante wird der Brennstoff in dem Leitungsabschnitt der Hauptstufe durch das Querschnittsreduktionsmittel geleitet. Dies erlaubt eine einfache Abkopplung der Hauptstufe von der Brennstoffversorgung, ohne das Vorhandensein eines weiteren Ventilmittels bzw. einer weiteren Absperrvorrichtung. Die Hauptstufe kann so zeitweise ausgeschaltet sein, z. B. während eines Lastwechsels im Betrieb oder in der Startphase, während die Pilotstufe betrieben wird und mit Brennstoff zu versorgen ist.

In einer weiteren Verfahrensvariante kann der Brennstoff in den beiden Leitungsabschnitten durch jeweils ein Querschnittsreduktionsmittel, insbesondere in Ausbildung eines Ventilmittels, z. B. in Ausbildung eines Proportionalventils, geleitet werden, und kann zur Einstellung des vorgegebenen Verhältnisses ein Schließungsverhältnis der Ventilmittel (Öffnung des Ventilmittels in dem Pilotstufen-Leitungsabschnitt zu Öffnung des Ventilmittels in dem Hauptstufen-Leitungsabschnitt) eingestellt werden, wobei zur Einstellung des Schließungsverhältnisses die jeweiligen Ventilcharakteristika einbezogen werden, d. h. ventilspezifische, insbesondere herstellerseitig angegebene Größen (beispielsweise der Durchflusskoeffizient). Das Schließungsverhältnis wird vorzugsweise derart eingestellt, dass ein ermitteltes bzw. vorgegebenes Verhältnis des Brennstoffstroms der Pilotstufe zu dem Brennstoffstrom der Hauptstufe erreicht wird. Dabei wird die Öffnungsstellung des Ventilmittels der Pilotstufe in der Ermittlungseinheit unter Vorgabe des Verhältnisses und der Öffnungsstellung des Ventilmittels der Hauptstufe (als Eingangsgröße) ermittelt und dem Ventilmittel der Pilotstufe vorgegeben. Diese Verfahrensvariante wird vorteilhaft mit einer auf einen konstanten Förderdruck geregelten Verdichtervorrichtung kombiniert, wobei die Regelung des Gesamtbrennstoffstroms bzw. der Brennstoffströme über die beiden Ventilmittel erfolgt. Möglich ist dabei eine Kombination mit einem weiteren Teilstrang, in dem eine drehzahlgeregelte Verdichtervorrichtung angeordnet ist, was insbesondere bei einem Mischbetrieb mit unterschiedlichen Brennstoffen (beispielsweise Erdgas und Synthesegas) Vorteile bringen kann.

Vorzugsweise ist dabei der Brennstoffstrom der Pilotstufe gleich einem oder größer als ein minimaler Brennstoffstrom (ausreichend hoch zur Aufrechterhaltung des Pilotbetriebs), wobei bei der Steuerung oder Regelung des Brennstoffstroms der Pilotstufe der Brennstoffstrom in Abhängigkeit des Brennstoffstroms der Hauptstufe mit dem minimalen Brennstoffstrom verglichen wird und der größere Wert dem Querschnittsreduktionsmittel in dem Leitungsabschnitt der Pilotstufe zugeführt wird. Alternativ hierzu kann auch eine komponentenbasierte Lösung zur Aufrechterhaltung des minimalen Brennstoffstroms vorgesehen sein, beispielsweise durch eine parallel zu dem Ventilmittel der Pilotstufe angeordnete Querschnittsreduktion in Form einer "kritischen Düse", beispielsweise in Ausbildung einer Venturidüse. Durch eine derartige Verfahrensführung bzw. Ausbildung lässt sich vorteilhaft der Pilotbetrieb auch dann aufrechterhalten, wenn die Hauptstufe (zeitweise, beispielsweise bei einem Lastwechsel) nicht betrieben wird.

Eine einfache Ermittlung des minimalen Brennstoffstroms besteht darin, dass der minimale Brennstoffstrom zumindest in Abhängigkeit der Turbinenaustrittstemperatur und der Drehzahl aus einer als Eingangsgröße zugeführten oder in der Ermittlungseinheit hinterlegten Kennlinie in einer Ermittlungseinheit ermittelt wird. Die Kennlinie kann vorzugsweise vom Hersteller des Brennkammersystems der Gasturbinenanordnung für den maximal zu erwartenden Heizwert vorgegeben werden. Darüber wird das Minimum festgelegt. Durch den Vergleich des Schließungsverhältnisses von Pilotstufenventil zu Hauptstufenventil wird der Brennstoffstrom bei sinkenden Heizwerten nach oben korrigiert und somit das Verhältnis konstant gehalten bzw. dem Soll-Verhältnis angepasst.

In einer bevorzugten Ausbildungsvariante weist die Verdichtereinheit eine drehzahlregelbare Verdichtervorrichtung und/oder ein Rückführleitungsmittel auf. Wie vorstehend angegeben wirkt sich die drehzahlregelbare Verdichtervorrichtung insbesondere bei Betrieb mit niederkalorischen Brenngasen effizienzsteigernd aus. Durch das Rückführleitungsmittel ist eine genauere Steuerung bzw. Regelung im niedrigen Brennstoffstrombereich und/oder eine Absenkung des minimal möglichen Brennstoffstroms, unterhalb des seitens der Verdichtervorrichtung vorgegebenen minimalen Förderstroms, möglich, so dass ein größerer Brennstoffstrombereich abdeckbar ist.

In einer bevorzugten Ausbildungsvariante der Gasturbinenanordnung, insbesondere für einen Mischbetrieb mit unterschiedlichen Brenngasen, sind in dem Brennstoffversorgungsstrang zwei Teilstränge vorhanden, die jeweils an eine unterschiedliche Brennstoffquelle anschließbar sind und die jeweils eine Verdichtereinheit aufweisen, wobei die Teilstränge stromauf des Brennkammersystems zusammengeführt sind. So kann beispielsweise ein Teilstrang optimiert auf einen Betrieb mit einem hochkalorischen Brennstoff, beispielsweise Erdgas, und ein Teilstrang optimiert auf einen Betrieb mit niederkalorischem Brennstoff, beispielsweise Synthesegas, ausgelegt sein. So wird gleichzeitig eine Redundanz der Brennstoffzufuhr erzeugt und somit eine erhöhte Ausfallsicherheit der Gasturbinenanordnnung erreicht. Dabei kann beispielsweise ein Teilstrang ausschließlich mit Erdgas betrieben werden, sodass dieser nicht mit einem gegebenenfalls aggressiven und/oder verunreinigten Synthesegas in Berührung kommt und dadurch eine geringere Ausfallwahrscheinlichkeit aufweist. Der Brennstoff kann beispielsweise nacheinander aus den unterschiedlichen Teilsträngen bezogen werden oder zeitgleich in einem Mischbetrieb.

Eine vorteilhafte Ausbildung für einen Betrieb mit unterschiedlichen Brennstoffen kann beispielsweise darin bestehen, dass in dem ersten Teilstrang die Verdichtereinheit mit der drehzahlregelbaren Verdichtervorrichtung und in dem zweiten Teilstrang eine weitere Verdichtereinheit zum Betrieb mit konstanter Drehzahl vorhanden ist. Dabei wird vorzugsweise der erste Teilstrang für eine Brennstoffversorgung mit Synthesegas verwendet und der zweite Teilstrang für eine Versorgung mit Erdgas. In dem zweiten Teilstrang sind vorzugsweise zur Steuerung oder Regelung des Brennstoffstromes in den dort vorhandenen Leitungsabschnitten jeweils Ventilmittel vorhanden, gemäß der vorstehenden, in Zusammenhang mit der Verfahrensführung beschriebenen Ausbildungsvariante. Die Steuerung bzw. Regelung des Brennstoffstromes kann durch eine Kombination der vorstehend angegebenen Regelungsstrategien erreicht werden. Bei einem (gleichzeitigen) Mischbetrieb mit unterschiedlichen Brennstoffen über die beiden Teilstränge ist dabei der Anteil über die jeweiligen Teilstränge einzubeziehen.

Für einen einfachen Brenneraufbau wird jeder Brennerstufe lediglich ein Brennstoffstrom zugeführt, wobei die Brennstoffströme jeweils stromauf der Brennerstufen zusammengeführt werden. Dies geschieht unter Ausnutzung der Vorteile des Aufbaus des ersten Teilstrang vorzugsweise dadurch, dass der erste Teilstrang, vorzugsweise mit einem Leitungsabschnitt der Pilotstufe, in einen Leitungsabschnitt der Pilotstufe des zweiten Teilstrangs, insbesondere stromab des/der darin angeordneten Ventilmittel/s, und/oder, vorzugsweise mit einem Leitungsabschnitt der Hauptstufe, in einen Leitungsabschnitt der Hauptstufe des zweiten Teilstrangs, vorzugsweise stromab des darin angeordneten Ventilmittels, mündet.

Weitere vorteilhafte Ausgestaltungsvarianten der Gasturbinenanordnung sind sinngemäß in Zusammenhang mit den vorstehend angegebenen Verfahrensvarianten beschrieben.

Nachfolgend wird die Erfindung anhand von Ausführungsbeispielen unter Bezugnahme auf die Zeichnungen näher erläutert. Es zeigen:
- Fig. 1: ein Fließschema eines Teils einer Mikrogasturbinenanordnung mit einer drehzahlgeregelten Verdichtervorrichtung in einem Brennstoffversorgungsstrang zur Steuerung oder Regelung des Brennstoffstroms einer Pilotstufe in Abhängigkeit des Brennstoffstroms einer Hauptstufe,
- Fig. 2: ein Fließschema eines Teils der Mikrogasturbinenanordnung gemäß Fig. 1 umfassend Datenübertragungsverbindungen zur Visualisierung des Steuerungs- bzw. Regelungsprinzips des Brennstoffstroms,
- Fig. 3: ein Fließschema eines Teils einer Mikrogasturbinenanordnung gemäß einer zweiten Ausführungsvariante, mit einer druckgeregelten Verdichtervorrichtung in einem Brennstoffversorgungsstrang, zur Steuerung oder Regelung des Brennstoffstroms der Pilotstufe in Abhängigkeit des Brennstoffstroms der Hauptstufe,
- Fig. 4: ein Fließschema eines Teils der Mikrogasturbinenanordnung gemäß Fig. 3 umfassend Datenübertragungsverbindungen zur Visualisierung des Steuerungs- bzw. Regelungsprinzips des Brennstoffstroms,
- Fig. 5: ein Fließschema eines Teils einer Mikrogasturbinenanordnung gemäß einer dritten Ausführungsvariante, mit einer drehzahlgeregelten und einer druckgeregelten Verdichtervorrichtung in Teilsträngen eines Brennstoffversorgungsstrangs, zur Steuerung oder Regelung des Brennstoffstroms der Pilotstufe in Abhängigkeit des Brennstoffstroms der Hauptstufe und
- Fig. 6: ein Fließschema eines Teils einer Mikrogasturbinenanordnung gemäß einer vierten Ausführungsvariante, mit einer drehzahlgeregelten und einer druckgeregelten Verdichtervorrichtung in Teilsträngen eines Brennstoffversorgungsstrangs, zur Steuerung oder Regelung des Brennstoffstroms der Pilotstufe in Abhängigkeit des Brennstoffstroms der Hauptstufe.

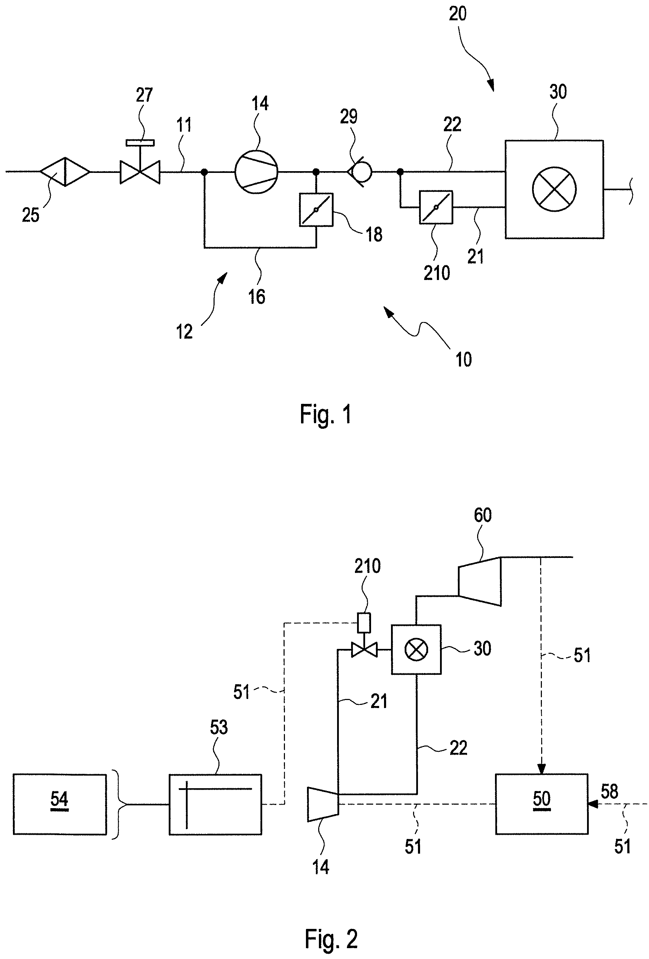

Fig. 1 zeigt in einem Fließschema einen Teil einer Mikrogasturbinenanordnung mit einem Brennstoffversorgungsstrang 10 zur Versorgung eines stromab daran gekoppelten Brennkammersystems 30 mit Brennstoff, insbesondere Brenngas. Die Mikrogasturbinenanordnung ist, insbesondere durch die nachfolgend beschriebene Ausgestaltung mit der erfindungsgemäßen Steuerung und/oder Regelung der Brennstoffversorgung, auch auf einen Betrieb mit niederkalorischen Brenngasen (z. B. Synthesegasen mit Heizwerten z. B. zwischen 3 und 30 MJ/kg) optimiert. Dazu weist die Mikrogasturbinenanordnung, neben den entsprechend geeigneten Komponenten, eine entsprechend ausgebildete Steuerungseinrichtung auf.

Das Brennkammersystem 30 weist einen Brenner mit einer Hauptstufe und einer zweiten Stufe, insbesondere einer Pilotstufe, auf. Die Pilotstufe dient zur Stabilisierung des Verbrennungsprozesses in dem Brennkammersystem 30, auch während transienter Vorgänge (z. B. Zündung, Lastwechsel).

In dem Brennstoffversorgungsstrang 10 stehen unterschiedliche Komponenten über Leitungsmittel 11 miteinander in Strömungsverbindung. So weist der Brennstoffversorgungsstrang 10 eingangsseitig, stromab einer (nicht gezeigten) Koppelstelle mit einer Brennstoffquelle, zunächst eine Filtervorrichtung 25 zur Beseitigung von eventuellen Verunreinigungen in dem Brenngas und stromab davon eine Absperrvorrichtung, insbesondere ein Absperrventil 27, auf, um den Brennstoffversorgungsstrang 10 von der Brennstoffquelle abzukoppeln.

Stromab der Absperrvorrichtung 27 ist eine Verdichtereinheit 12 in dem Brennstoffversorgungsstrang 10 angeordnet. Die Verdichtereinheit 12 umfasst eine drehzahlregelbare Verdichtervorrichtung 14, die in der in Fig. 1 dargestellten Ausführungsvariante zur drehzahlgeregelten Regelung des Brennstoffstroms dient. Weiterhin umfasst die Verdichtereinheit optional ein Rückführleitungsmittel 16 mit einem darin angeordneten Querschnittsreduktionsmittel, insbesondere einer Drosselvorrichtung 18 oder einem Ventil, über welches ein Teil des durch die Verdichtervorrichtung 14 geförderten Brenngases bzw. Brennstoffes an die Verdichtervorrichtung 14 gesteuert bzw. geregelt zurückgeführt werden kann. Auf diese Weise kann die Genauigkeit des Massen- bzw. Volumenstroms an Brennstoff (kurz "Brennstoffstrom") bei kleinen Fördermengen erhöht und/oder eine Mindestfördermenge der Verdichtervorrichtung 14 weiter reduziert werden.

Stromab der Verdichtereinheit 12 weist der Brennstoffversorgungsstrang 10 ein Rückschlagsicherungsmittel 29 auf, um z. B. im Falle eines kurzfristigen Druckanstiegs in dem Brennkammersystem 30 über den Förderdruck der Verdichtervorrichtung 14 eine Rückströmung von Brennstoff zu verhindern.

Stromab des Rückschlagsicherungsmittels 29 teilen sich die Leitungsmittel 11 in einem brennerspezifischen Abschnitt 20 des Brennstoffversorgungsstrangs 10 auf einen Leitungsabschnitt 21 der Hauptstufe (zur Brennstoffversorgung der Hauptstufe) und einen Leitungsabschnitt 22 der Pilotstufe (zur Brennstoffversorgung der Pilotstufe) auf, zur getrennten Brennstoffversorgung der beiden Brennerstufen. In dem brennerspezifischen Abschnitt 20 ist lediglich ein verstellbares Querschnittsreduktionsmittel angeordnet, sodass vorteilhaft die Systemkomplexität sowie Strömungsverluste geringgehalten werden und so ein vergleichsweise hoher Wirkungsgrad erreichbar ist. In einer einfachen Ausführungsvariante ist das Querschnittsreduktionsmittel als Drosselvorrichtung 210, insbesondere als Drosselklappe, ausgebildet. Möglich ist auch ein Ventilmittel z. B. in Ausbildung als Proportionalventil. Die hier gezeigte Anordnung in dem Leitungsabschnitt 21 bringt den Vorteil, dass die Hauptstufe bei weitergeführtem Pilotbetrieb, wie z. B. während transienter Vorgänge wie Lastwechsel oder Zündung der Hauptstufe, vollständig von der Brennstoffversorgung durch Schließen der Drosselvorrichtung 210 abgekoppelt werden kann. Möglich wäre auch eine Anordnung des Querschnittsreduktionsmittels bzw. der Drosselvorrichtung 210 in dem Leitungsabschnitt 22 der Pilotstufe.

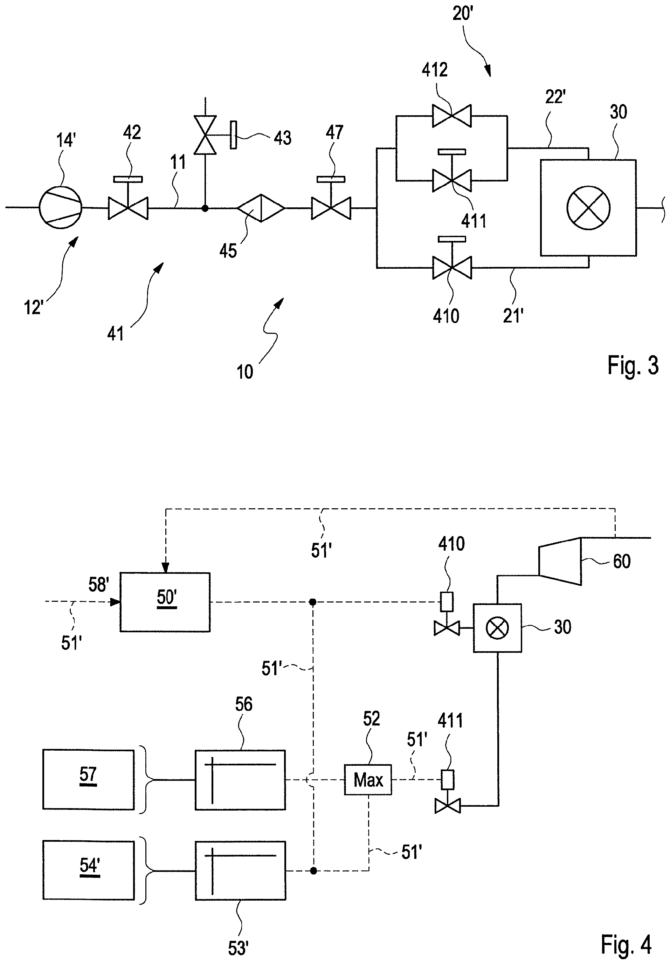

Zusätzlich sind, ebenso wie in dem Beispiel gemäß Fig. 3 oder auch anderen erfindungsgemäßen Ausführungsvarianten, in den Leitungsmitteln 11 (nicht gezeigte) zweckmäßigerweise Druckmessvorrichtungen vorhanden. Diese dienen insbesondere zur Ermittlung der Vor- und/oder Hinterdrücke der Querschnittsreduktionsmittel, um unter Einbeziehung der Ventilcharakteristika (insbesondere der Durchflusskoeffizienten) aus den Öffnungsstellungen auf die Brennstoffströme schließen zu können.

Im Betrieb wird Brennstoff, insbesondere in Form von Brenngas, aus der Brennstoffquelle über die Filtervorrichtung 25 und die Absperrvorrichtung 27 über die Verdichtereinheit 12 durch die Verdichtervorrichtung 14 auf einen Versorgungsdruck (oberhalb des Brennkammersystemdrucks) zur Förderung des benötigten Brennstoffstroms verdichtet. Bei der gezeigten Ausbildungsvariante wird über die Variation der Drehzahl der Brennstoffstrom gesteuert bzw. geregelt, d. h. der Förderdruck ist lediglich derart hoch, dass ein bestimmter Brennstoffstrom gefördert wird. Der Brennstoffstrom wird über die beiden Leitungsabschnitte 21, 22 der Hauptstufe und der Pilotstufe zugeführt.

Die genauere Steuerung bzw. Regelung des Brennstoffstroms in der Ausbildungsvariante des Brennstoffversorgungsstrangs 10 gemäß Fig. 1 mittels der Steuerungseinrichtung der Mikrogasturbinenanordnung ist schematisch in Fig. 2 gezeigt. Fig. 2 zeigt das Verfahrensprinzip unter Darstellung einzelner (nicht aller) Komponenten der Mikrogasturbinenanordnung, sowie deren Datenkommunikation mittels Datenübertragungsverbindungen 51 und Verarbeitung der Daten in der Steuerungseinrichtung der Mikrogasturbinenanordnung.

In der gezeigten Variante wird der Brennstoffstrom über die Drehzahlregelung der Verdichtervorrichtung 14 in Abhängigkeit der Turbinenaustrittstemperatur (der Abgastemperatur gemessen stromab einer Turbinenanordnung 60 der Mikrogasturbinenanordnung) geregelt. Hierzu wird die Turbinenaustrittstemperatur einer Temperaturregeleinheit 50 der Steuerungseinrichtung zugeführt. Dort wird der Wert mit einem Referenzwert 58 der Turbinenaustrittstemperatur verglichen. Bei Abweichen wird die Drehzahl der Verdichtervorrichtung 14 entsprechend angepasst, um eine Anpassung des Brennstoffstroms vorzunehmen. Die Änderung des Brennstoffstroms bewirkt über die Änderung der Luftzahl in dem Brennkammersystem 30 eine Änderung der Verbrennungstemperatur und damit eine Änderung der Turbinenaustrittstemperatur. Gemäß dem Kerngedanken der Erfindung wird der Brennstoffstrom über den Leitungsabschnitt 22 der Pilotstufe (kurz "Brennstoffstrom der Pilotstufe") in Abhängigkeit des Brennstoffstroms der Hauptstufe geregelt, wobei das Verhältnis zwischen Haupt- und Pilotbrennstoff konstant gehalten bzw. einem Soll-Verhältnis angepasst wird. Auf diese Weise wird bei einer Änderung der Brennstoffqualität, die mit einer Änderung des Heizwertes einhergeht, mit der Gesamtbrennstoffmenge bzw. der Brennstoffmenge zur Versorgung der Hauptstufe automatisch auch die Brennstoffmenge zur Versorgung der Pilotstufe geändert. Sinkt beispielsweise der Heizwert bei dem Übergang eines Betriebs mit Erdgas zu einem Betrieb mit niederkalorischem Synthesegas um einen Faktor 10, wird ein entsprechend hoher Brennstoffstrom über die Hauptstufe benötigt, um die vorgegebene Turbinenaustrittstemperatur einzuhalten. Durch die anteilige Erhöhung des Brennstoffstromes in der Pilotstufe kann auch hier eine stabile Verbrennung aufrechterhalten werden.

Bei der in Fig. 1 und Fig. 2 gezeigten Ausführungsvariante lässt sich das konstante Verhältnis besonders einfach und mit vergleichsweise geringen Strömungsverlusten durch die Drosselvorrichtung 210, die insbesondere als Drosselklappe in dem Leitungsabschnitt 21 der Hauptstufe ausgebildet ist, bewerkstelligen. Dies wird insbesondere in Kombination mit der drehzahlregelbaren Ausbildung der Verdichtervorrichtung 14 ermöglicht, wobei die Menge des Brennstoffstroms über die Verdichterdrehzahl geregelt wird. So kann auf verhältnismäßig teure und empfindliche Ventilmittel beispielsweise in Ausbildung als Proportionalventilen verzichtet werden. Zugleich wird hierdurch ein geringerer Druckverlust verglichen zu dem Vorhandensein von Proportionalventilen bewirkt, was sich positiv auf den Wirkungsgrad des Gesamtsystems auswirkt. Besonders ausgeprägt ist die Wirkung bei einem Betrieb mit niederkalorischen Brenngasen, bei denen aufgrund des meist geringen Heizwertes (z. B. bis zu einem Faktor 10 geringer als bei Erdgas) entsprechend hohe Brennstoffströme benötigt werden.

Das Verhältnis des Brennstoffstroms der Pilotstufe zu dem Brennstoffstrom der Hauptstufe bzw. dem Gesamtbrennstoffstrom ist z. B. über eine Ermittlungseinheit 53 der Drosselvorrichtung 210 vorgebbar. Dabei kann ein fester Wert hinterlegt sein oder es kann, für einen optimierten Betrieb, ein angepasster Wert über eine Ermittlungseinheit 53 ermittelt werden. Dabei können der Ermittlungseinheit 53 ein Satz an Eingangsgrößen 54 umfassend Betriebsgrößen wie die Drehzahl der Verdichtervorrichtung 14 (und gegebenenfalls der über das Rückführungsmittel 16 zurückströmende Anteil an Brennstoff), die Turbinenaustrittstemperatur, die Drehzahl der Turbinenanordnung 60 sowie der Druck vor der Drosselvorrichtung 210 zugeführt werden. Vorzugsweise sind in dem Satz an Eingangsgrößen 54 für die Ermittlungseinheit 53 oder in der Ermittlungseinheit 53 auch komponentenspezifische Charakteristika der Drosselvorrichtung 210 ("Ventilcharakteristika") hinterlegt bzw. werden dieser zugeführt, die herstellerseitig z. B. durch Kalibiermessungen ermittelt und angegeben werden. Die Drehzahl der Turbinenanordnung 60 und die Turbinenaustrittstemperatur liefern indirekt den Betriebsdruck in dem Brennkammersystem 30 der Mikrogasturbinenanordnung, da sich dieser über Kennlinien, die in dem Satz an Eingangsgrö-ßen 54 oder in der Ermittlungseinheit 53 hinterlegt sind, bestimmen lässt. Über eine, z. B. ebenfalls in der Ermittlungseinheit 53 hinterlegten, Kennlinie der Verdichtervorrichtung 40 lässt sich der Brennstoffstrom ermitteln, der wiederum in Zusammenhang mit der Drehzahl der Turbinenanordnung 60 und der Turbinenaustrittstemperatur indirekt Informationen über die Brennstoffqualität liefert. Entsprechend der Brennstoffqualität bzw. des Brennstoffstroms kann nun ein entsprechendes Verhältnis über die Drosselvorrichtung 210 bzw. die Stellung der Drosselklappe gesteuert werden. Das Verhältnis bzw. der Brennstoffstrom des Pilotbrenners bei einer entsprechenden Stellung des Querschnittsreduktionsmittels bzw. die Stellung der Drosselvorrichtung 210 kann beispielsweise als Kennlinie oder Tabelle in der Ermittlungseinheit 53 hinterlegt sein und daraus ermittelt werden.

Ein weiterer Vorteil der in den Fig. 1 und Fig. 2 gezeigten Ausführungsvariante besteht darin, dass durch die Verdichtervorrichtung 14 lediglich ein solches Druckniveau bereitgestellt wird, wie für die Förderung des erforderlichen Brennstoffstroms in das Brennkammersystem 30 an einem jeweiligen Lastpunkt erforderlich ist. Dabei ist der für die Regelung des Gesamtbrennstoffstroms aufzubringende Vordruck durch die Verdichtervorrichtung 14 geringer als bei einer druckbasierten Regelung unter Verwendung von Regelventilmitteln. Dies trägt zur Effizienzsteigerung bei und erlaubt ggf. die Verwendung einer kompakteren Verdichtervorrichtung 14. Insgesamt lässt sich so der Brennstoffversorgungsstrang 10 kompakter gestalten und somit gegebenenfalls in die Mikrogasturbinenanordnung integrieren. Die Verdichtervorrichtung 14 ist für eine kompakte Bauweise als Radialverdichter ausgeführt und wird elektrisch angetrieben. Die Verdichtervorrichtung 14 könnte jedoch auch über ein Getriebe mit der Welle der Mikrogasturbinenanordnung gekoppelt werden oder durch Rückführung eines Teilstroms an Abgas, nachdem Prinzip eines Turboladers, angetrieben werden.

Ebenfalls möglich ist die erfindungsgemäße Steuerung bzw. Regelung des Brennstoffstroms der Pilotstufe in Abhängigkeit zu dem Gesamtbrennstoffstrom bzw. dem Brennstoffstrom der Hauptstufe auch mit einer Ausbildungsvariante wie in Fig. 3 gezeigt, die eine entsprechend ausgebildete Steuerung/Regelung mit der Ermittlungseinheit 53 aufweist. In dem Brennstoffversorgungsstrang 10 ist eingangsseitig eine Verdichtervorrichtung 14' angeordnet, die auf einen, im Wesentlichen konstant gehaltenen, Brennstoffvordruck regelt. Stromab davon ist ein Ventilmittel 42 zur Absperrung und ein in einer Seitenleitung angeordnetes Ventilmittel 43 zur Entlüftung angeordnet. Stromab des Anschlusses der Seitenleitung befindet sich ein Filter 45 und ein weiteres, ebenfalls zur Absperrung aus Sicherheitsgründen vorhandenes Ventilmittel 47. Stromab des Ventilmittels 47 teilen sich die Leitungsmittel 11 in einem brennerspezifischen Abschnitt 20' in einen Leitungsabschnitt 21' der Hauptstufe und einen Leitungsabschnitt 22' der Pilotstufe auf. In dem Leitungsabschnitt 21' der Hauptstufe ist als Querschnittsreduktionsmittel ein Ventilmittel 410, z. B. in Ausbildung eines Proportionalventils, zur Steuerung bzw. Regelung des Brennstoffstroms vorhanden.

In dem Leitungsabschnitt 22' der Pilotstufe befindet sich eine Querschnittsreduktion 412 in Form einer "kritischen Düse", beispielsweise nach Art einer Venturidüse, die einen Mindeststrom an Brennstoff für die Pilotstufe bereitstellt. Parallel hierzu ist ein Ventilmittel 411 als Querschnittsreduktionsmittel zur Steuerung bzw. Regelung des Brennstoffstroms der Pilotstufe angeordnet.

Fig. 4 zeigt schematisch das Steuerung- bzw. Regelungsprinzip des Brennstoffstromes in der Mikrogasturbinenanordnung entsprechend Fig. 3, bis auf die in Fig. 4 nicht vorhandene Querschnittsreduktion 412. In einer Temperaturregeleinheit 50' wird über den Vergleich der Turbinenaustrittstemperatur einer Turbinenanordnung 60' mit einem Referenzwert 58' der Turbinenaustrittstemperatur der Brennstoffstrom für die Hauptstufe über die Stellung des Ventilmittels 410 geregelt. Die Stellung des Ventilmittels 410 wird zudem einer Ermittlungseinheit 53' zugeführt, in der auch das Verhältnis von Pilotbrennstoff zu Hauptbrennstoff hinterlegt ist bzw. ermittelt wird. Aus der Vorgabe des Verhältnisses und der Stellung des Ventilmittels 410 wird die einzunehmende Stellung des Ventilmittels 411 ermittelt und dem Ventilmittel 411 zur Einstellung zugeführt. Zur Ermittlung der Ventilstellungen können insbesondere die Ventilcharakteristika der Ventilmittel 410 und 411 einbezogen werden.

Die Ermittlung kann beispielsweise unter Vorgabe eines Satzes 54' an Eingangsgrö-ßen erfolgen. Dieser umfasst vorzugsweise, neben den Ventilcharakteristika der Ventilmittel 410 und 411, die Betriebsgrößen "Turbinenaustrittstemperatur", "Drehzahl der Turbinenanordnung 60'" (die indirekt den Betriebsdruck in der Brennkammer liefern können) und den durch die Verdichtervorrichtung 14 bereitgestellten Vordruck, die der Ermittlungseinheit 53' zugeführt werden. Diese Größen können zusammen mit der Ventilstellung (d. h. der Öffnungsstellung) des jeweiligen Ventilmittels 410, 411 auch (indirekt) Informationen über den Brennstoffstrom durch das Ventilmittel 410 liefern. Aus den Eingangsgrößen lässt sich ein für spezifische Betriebspunkte vorgegebenes Verhältnis von Brennstoffstrom der Pilotstufe zu Brennstoffstrom der Hauptstufe bzw. Gesamtbrennstoffstrom ermitteln. Die Verhältnisse können beispielsweise durch Vorversuche ermittelt werden und in Abhängigkeit der Betriebspunkte bzw. Betriebsgrößen in dem Satz an Eingangsrößen 54' oder in der Ermittlungseinheit 53' hinterlegt sein.

Vor Übermittlung des Wertes der Ventilstellung an das Ventilmittel 411 kann dieser Wert, zur Aufrechterhaltung eines minimalen Brennstoffstroms, in einer Vergleichseinheit 52 mit einem Vergleichswert zum Erhalt des minimalen Brennstoffstroms verglichen werden. Unterschreitet der Wertes aus der Ermittlungseinheit 53' den Vergleichswert, wird der Vergleichswert an das Ventilmittel 411 übermittelt. Durch diese Steuerung bzw. Regelung eines minimalen Brennstoffstroms über die Pilotstufe kann auf die Querschnittsreduktion 412, die eine komponentenbasierte Lösung für den minimalen Brennstoffstrom bereitstellt, verzichtet werden, wie in Fig. 4 gezeigt.

Der Vergleichswert zum Erhalt des minimalen Brennstoffstroms kann sich beispielsweise aus einer zweiten Ermittlungseinheit 56 ergeben. Dabei kann unter Einbeziehung eines zweiten Satzes an Eingangsgrößen 57, beispielsweise dem Vordruck des Brenngases, der Turbinenaustrittstemperatur und der Drehzahl der Turbinenanordnung 60 sowie der Ventilcharakteristik eine einzustellende Leistung für einem maximalen zu erwartenden Heizwert (z. B. dem Heizwert von Erdgas oder Methan) über die Pilotstufe und daraus eine einzustellende Ventilstellung des Ventilmittels 411 ermittelt werden.

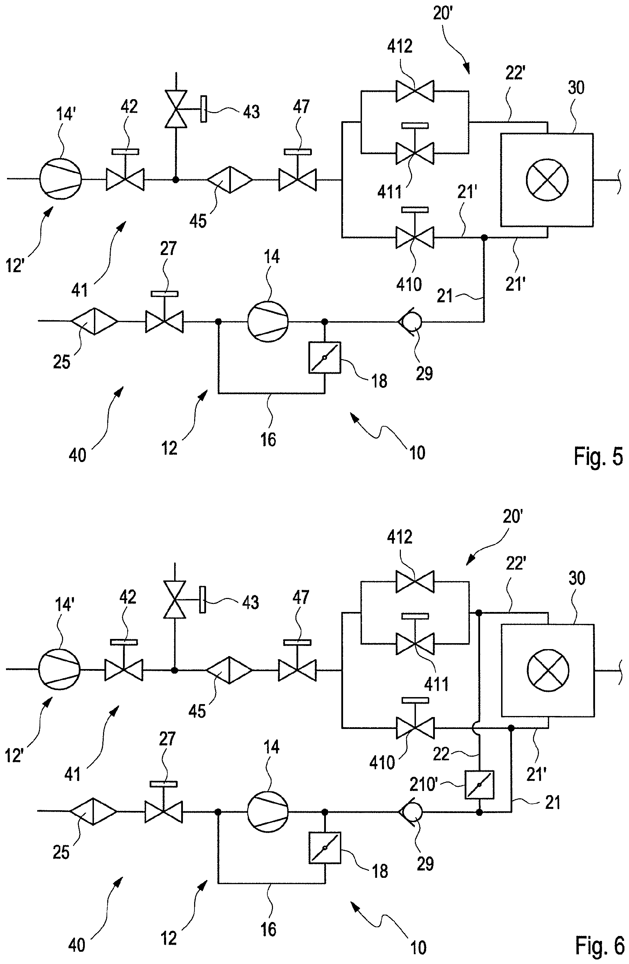

Fig. 5 zeigt eine Mikrogasturbinenanordnung, bei der in dem Brennstoffversorgungsstrang 10 zwei Teilstränge, ein erster Teilstrang 40 und ein zweiter Teilstrang 41, vorhanden sind. Dabei ist der erste Teilstrang 40 nach dem Prinzip gemäß Fig. 1, mit einer drehzahlregelbaren Verdichtervorrichtung 14, ausgebildet und steuerbar bzw. regelbar, und der zweite Teilstrang 41 nach dem Prinzip gemäß Fig. 3 mit einer Verdichtervorrichtung 14', die einen im Wesentlichen konstanten Förderdruck des Brennstoffes bereitstellt und entsprechend steuer- bzw. regelbar ist. In Fig. 5 ist der erste Teilstrang 40 mit dem zweiten Teilstrang 41 über den Leitungsabschnitt der Hauptstufe 21' strömungsmechanisch gekoppelt, wobei der erste Teilstrang 40 an seinem stromabseitigen Ende stromab des Ventilmittels 410 in den Leitungsabschnitt 21' in den zweiten Teilstrang 41 mündet.

Bei dieser Ausführungsvariante kann z. B. vorteilhaft die Brennstoffversorgung der Mikrogasturbinenanordnung mit Erdgas über den zweiten Teilstrang 41 erfolgen. Der zweite Teilstrang 41 bietet z. B. den Vorteil einer schnelleren Regelung über die Ventilmittel 410, 411, sodass etwaige Schwankungen eines niederkalorischen Brenngases über den ersten Teilstrang 40 ausgeglichen werden können. Niederkalorischer Brennstoff kann alleinig über den ersten Teilstrang 40, durch vollständige Umschaltung auf den ersten Teilstrang 40, oder im Mischbetrieb mit Erdgas zusätzlich aus dem zweiten Teilstrang 41, zugeführt werden. Beispielsweise kann es vorteilhaft sein, das Brennkammersystem 30 zunächst in einer Startphase mit Erdgas aufzuheizen und anschließend auf einen Betrieb mit Synthesegas umzuschalten. So kann z. B. ein Auskondensieren ggf. vorhandener Teere aus dem Synthesegas verhindert werden. Zudem wird durch das Vorhandensein der beiden Teilstränge 40, 41 eine Redundanz der Brennstoffförderungsmöglichkeit in das Brennkammersystem 30 erhalten, wodurch sich eine erhöhte Ausfallsicherheit ergibt. Die Ausfallsicherheit lässt sich weiter dadurch erhöhen, dass der zweite Teilstrang 41 nur mit Erdgas betrieben wird. Da niederkalorische Gase in Form von Synthesegasen häufig verunreinigt und/oder aggressiv sind, unterliegt der Betrieb des ersten Teilstrangs 40 einem erhöhten Ausfallrisiko, welches durch Vorhandensein des zweiten Teilstrang 41, insbesondere für ausschließlichen Erdgasbetrieb, kompensiert werden kann.

Eine ähnliche Kombination, jedoch mit einer zusätzlichen Kopplung des Leitungsabschnitts 22' der Pilotstufe mit dem ersten Teilstrang 40 unter Zwischenschaltung eines Querschnittsreduktionsmittels beispielhaft in Ausbildung als Drosselvorrichtung 210', zeigt Fig. 6. Dabei mündet der Leitungsabschnitt 22 der Pilotstufe des ersten Teilstrangs 40 in den Leitungsabschnitt 22' der Pilotstufe des zweiten Teilstrangs 41. Somit kann, z. B. nach einem Startvorgang mit Erdgas über den zweiten Teilstrang 41, auf einen Betrieb beider Stufen mit einem niederkalorischen Brennstoff über den ersten Teilstrang 40 umgestellt werden, was eine größere Einsparung des hochkalorischen Brennstoffes, beispielsweise Erdgas, ermöglicht.

Die Steuerung bzw. Regelung des Brennstoffstroms der Pilotstufe kann auch bei den in Fig. 5 und 6 gezeigten Beispielen vorteilhaft unter Einbeziehung des Brennstoffstromes über die Hauptstufe bzw. des Gesamtbrennstoffstromes erfolgen. Bei einem Mischbetrieb sind vorzugsweise bei der Steuerung bzw. Regelung die Brennstoffanteile aus beiden Teilsträngen zu berücksichtigen, z. B. durch Berücksichtigung des Verhältnisses des über die Verdichtereinheit 12 zu dem über das Ventilmittel 410 geförderten Brennstoffstroms. Bei dem Beispiel in Fig. 6 kann zusätzlich das Verhältnis über die Leitungsabschnitte 21 und 22 einbezogen werden. Das Verhältnis an Brennstoff über den ersten und zweiten Teilstrang 40, 41 ist dann vorteilhaft vorgebbar. Möglich ist bei den in Fig. 5 und 6 gezeigten Varianten auch eine von dem Verhältnis unabhängige Steuerung oder Regelung des Brennstoffstromes der Pilotstufe.

Durch das erfindungsgemäße Verfahren und die zur Durchführung des Verfahrens ausgebildete Mikrogasturbinenanordnung lässt sich eine auch auf den Betrieb mit niederkalorischen Brennstoffen bzw. Brenngasen optimierte Mikrogasturbinenanordnung bereitstellen.

## Patentansprüche

1. Verfahren zum Betreiben einer Mikrogasturbinenanordnung, bei dem Brennstoff in Form von Brenngas einem Brennkammersystem (30) über einen Brennstoffversorgungsstrang (10) zugeführt wird, wobei
- der Brennstoffstrom stromauf des Brennkammersystems (30) mittels einer Verdichtervorrichtung (14, 14') einer Verdichtereinheit (12, 12`) auf einen Versorgungsdruck verdichtet wird und stromab der Verdichtereinheit (12, 12') in einem brennerspezifischen Abschnitt (20, 20') auf zwei Leitungsabschnitte (21, 21', 22, 22') zur getrennten Brennstoffversorgung einer Hauptstufe und einer Pilotstufe des Brennkammersystems (30) aufgeteilt wird und nach Aufteilung der Brennstoff durch zumindest ein in dem brennerspezifischen Abschnitt (20, 20') angeordnetes Querschnittsreduktionsmittel (210, 411) strömt,
- der Brennstoffstrom über den Leitungsabschnitt (22, 22') der Pilotstufe mittels des zumindest einen Querschnittsreduktionsmittels in Abhängigkeit des Brennstoffstroms über den Leitungsabschnitt (21, 21') der Hauptstufe gesteuert oder geregelt wird,
- der Brennstoffstrom über den Leitungsabschnitt (22, 22') der Pilotstufe in Abhängigkeit eines vorgegebenen Verhältnisses zu dem Brennstoffstrom über den Leitungsabschnitt (21) der Hauptstufe gesteuert bzw. geregelt wird und wobei
- zur Steuerung oder Regelung des Brennstoffstroms das Verhältnis des Brennstoffstroms der Pilotstufe zu dem Brennstoffstrom der Hauptstufe in einer Ermittlungseinheit (53, 53') zumindest in Abhängigkeit einer Turbinenaustrittstemperatur stromab einer Turbinenanordnung (60, 60') der Mikrogasturbinenanordnung und einer Turbinendrehzahl der Turbinenanordnung (60, 60') ermittelt wird und anschließend unter Einbeziehung des Verhältnisses eine Öffnungsstellung des Querschnittreduktionsmittels in der Ermittlungseinheit (53, 53') ermittelt und dem Querschnittreduktionsmittel vorgegeben wird.

2. Verfahren nach Anspruch 1,
**dadurch gekennzeichnet,**
**dass** der Brennstoff in der Verdichtereinheit (12) durch eine drehzahlregelbare Verdichtervorrichtung (14) verdichtet wird und
**dass** der Gesamtbrennstoffstrom über die Variation der Drehzahl gesteuert oder geregelt wird.

3. Verfahren nach Anspruch 2,
**dadurch gekennzeichnet,**
**dass** der Brennstoff in dem brennerspezifischen Abschnitt (20, 20') lediglich in einem der Leitungsabschnitte (21, 22) durch das Querschnittsreduktionsmittel, insbesondere in Ausbildung einer Drosselvorrichtung (210, 210`), geleitet wird.

4. Verfahren nach einem der Ansprüche 2 oder 3,
**dadurch gekennzeichnet,**
**dass** das Verhältnis durch Steuerung oder Regelung des Querschnittsreduktionsmittels unter Einbeziehung der Drehzahl der Verdichtervorrichtung (14) gesteuert oder geregelt wird.

5. Verfahren nach Anspruch 3 oder 4,
**dadurch gekennzeichnet,**
**dass** der Brennstoff in dem Leitungsabschnitt (21) der Hauptstufe durch das Querschnittsreduktionsmittel geleitet wird.

6. Verfahren nach Anspruch 1 oder 2,
**dadurch gekennzeichnet,**
**dass** der Brennstoff in den beiden Leitungsabschnitten (21, 21', 22, 22') durch jeweils ein Querschnittsreduktionsmittel in Ausbildung eines Ventilmittels (410, 411) geleitet wird, und
**dass** zur Einstellung des vorgegebenen Verhältnisses ein Schließungsverhältnis der Ventilmittel (410, 411) eingestellt wird, wobei zur Einstellung des Schlie-ßungsverhältnisses die jeweiligen Ventilcharakteristika einbezogen werden.

7. Verfahren nach Anspruch 6,
**dadurch gekennzeichnet,**
**dass** der Brennstoffstrom der Pilotstufe gleich einem oder größer als ein minimaler Brennstoffstrom ist, wobei bei der Steuerung oder Regelung des Brennstoffstroms der Pilotstufe der Brennstoffstrom in Abhängigkeit des Brennstoffstroms der Hauptstufe mit dem minimalen Brennstoffstrom verglichen wird und der größere Wert dem Querschnittsreduktionsmittel in dem Leitungsabschnitt (22, 22') der Pilotstufe zugeführt wird.

8. Verfahren nach Anspruch 7,
**dadurch gekennzeichnet,**
**dass** der minimale Brennstoffstrom zumindest in Abhängigkeit der Turbinenaustrittstemperatur und der Drehzahl aus einer als Eingangsgröße zugeführten oder in der Ermittlungseinheit (53, 53`) hinterlegten Kennlinie in der Ermittlungseinheit (53, 53') ermittelt wird.

9. Mikrogasturbinenanordnung mit einem Brennkammersystem (30), mit einem Brennstoffversorgungsstrang (10) zur Versorgung des Brennkammersystems (30) mit Brennstoff, wobei der Brennstoffversorgungsstrang (10) Leitungsmittel (11) zur Strömungsverbindung von Komponenten, eine Verdichtereinheit (12) mit einer Verdichtervorrichtung (14) und einen stromab der Verdichtereinheit (12) angeordneten brennerspezifischen Abschnitt (20, 20') umfasst, in dem die Leitungsmittel (11) auf zwei Leitungsabschnitte (21, 22) zur getrennten Brennstoffversorgung einer Hauptstufe und einer Pilotstufe des Brennkammersystems (30) aufgetrennt sind und nach Auftrennung der Brennstoff durch zumindest ein in dem brennerspezifischen Abschnitt angeordnetes Querschnitssreduktionsmittel (210, 411) strömt, einer Steuerungseinrichtung mit einer Ermittlungseinheit (53, 53'), Steuerungseinrichtung dazu ausgebildet ist, das Verfahren nach einem der Ansprüche 1 bis 8 durchzuführen.

10. Mikrogasturbinenanordnung nach Anspruch 9,
**dadurch gekennzeichnet,**
**dass** die Verdichtereinheit (12) eine drehzahlregelbare Verdichtervorrichtung (14) und/oder ein Rückführleitungsmittel (16) aufweist.

11. Mikrogasturbinenanordnung nach Anspruch 10,
**dadurch gekennzeichnet,**
**dass** in dem Brennstoffversorgungsstrang (10) zwei Teilstränge (40, 41) vorhanden sind, die jeweils an eine unterschiedliche Brennstoffquelle anschließbar sind und die jeweils eine Verdichtereinheit (12, 12`) aufweisen, wobei die Teilstränge (40, 41) stromauf des Brennkammersystems (30) zusammengeführt sind.

12. Mikrogasturbinenanordnung nach Anspruch 11,
**dadurch gekennzeichnet,**
**dass** in dem ersten Teilstrang (40) die Verdichtereinheit (12) mit der drehzahlregelbaren Verdichtervorrichtung (14) und in dem zweiten Teilstrang (41) eine weitere Verdichtereinheit (12') zum Betrieb mit konstanter Drehzahl vorhanden ist.

13. Mikrogasturbinenanordnung nach Anspruch 12,
**dadurch gekennzeichnet,**
**dass** der erste Teilstrang (40) in einen Leitungsabschnitt (22') der Pilotstufe und/oder in einen Leitungsabschnitt (21') der Hauptstufe des zweiten Teilstrangs (41) mündet.

## Claims

1. Method for operating a micro turbine assembly, in which fuel in the form of fuel gas is supplied to a combustion chamber system (30) via a fuel supply line (10), wherein
- the fuel flow upstream of the combustion chamber system (30) is compressed to a supply pressure by means of a compressor device (14, 14') of a compressor unit (12, 12') and, downstream of the compressor unit (12, 12'), is allocated in a burner-specific portion (20, 20') to two line portions (21, 21', 22, 22') for the separate fuel supply of a main stage and a pilot stage of the combustion chamber system (30) and, after allocation, the fuel flows through at least one cross-sectional reduction means (210, 411) arranged in the burner-specific portion (20, 20'),
- the fuel flow is controlled or regulated via the line portion (22, 22') of the pilot stage by means of the at least one cross-sectional reduction means on the basis of the fuel flow via the line portion (21, 21') of the main stage,
- the fuel flow is controlled or regulated via the line portion (22, 22') of the pilot stage on the basis of a predetermined ratio to the fuel flow via the line section (21) of the main stage, and wherein
- for controlling or regulating the fuel flow, the ratio of the fuel flow of the pilot stage to the fuel flow of the main stage is determined in a determination unit (53, 53') at least on the basis of a turbine outlet temperature downstream of a turbine assembly (60, 60') of the micro turbine assembly and a turbine speed of the turbine assembly (60, 60'), and an open position of the cross-sectional reduction means is subsequently determined in the determination unit (53, 53') taking the ratio into account, and is specified to the cross-sectional reduction means.

2. Method according to claim 1,
**characterized in that**
the fuel in the compressor unit (12) is compressed by a variable-speed compressor device (14) and
**in that** the total fuel flow is controlled or regulated by varying the rotational speed.

3. Method according to claim 2,
**characterized in that**
the fuel in the burner-specific portion (20, 20') is guided only in one of the line portions (21, 22) through the cross-sectional reduction means, in particular forming a throttle device (210, 210').

4. Method according to claim 2 or 3,
**characterized in that**
the ratio is controlled or regulated by controlling or regulating the cross-sectional reduction means, taking into account the speed of the compressor device (14).

5. Method according to claim 3 or 4,
**characterized in that**
the fuel in the line portion (21) of the main stage is conveyed through the cross-sectional reduction means.

6. Method according to claim 1 or 2,
**characterized in that**
the fuel in the two line portions (21, 21', 22, 22') is conveyed in each case through a cross-sectional reduction means, forming a valve means (410, 411), and
**in that** a closing ratio of the valve means (410, 411) is adjusted for adjusting the predetermined ratio, the respective valve characteristics being taken into account in order to adjust the closing ratio.

7. Method according to claim 6,
**characterized in that**
the fuel flow of the pilot stage is equal to or greater than a minimum fuel flow, the fuel flow being compared, during the control or regulation of the fuel flow of the pilot stage, with the minimum fuel flow on the basis of the fuel flow of the main stage and the greater value of the cross-sectional reduction means being supplied in the line portion (22, 22') of the pilot stage.

8. Method according to claim 7,
**characterized in that**
the minimum fuel flow is determined in the determination unit (53, 53') at least on the basis of the turbine outlet temperature and the speed from a characteristic curve supplied as an input variable or stored in the determination unit (53, 53').

9. Micro turbine assembly comprising a combustion chamber system (30), comprising a fuel supply line (10) for supplying the combustion chamber system (30) with fuel, wherein the fuel supply line (10) comprises line means (11) for the fluidic connection of components, a compressor unit (12) having a compressor device (14) and a burner-specific portion (20, 20') arranged downstream of the compressor unit (12), in which the line means (11) are separated into two line portions (21, 22) for the separate fuel supply of a main stage and a pilot stage of the combustion chamber system (30) and, after separation, the fuel flows through at least one cross section reduction means (210, 411) arranged in the burner-specific portion, and a control device having a determination unit (53, 53'), wherein the control device is designed to carry out the method according to any of claims 1 to 8.

10. Micro turbine assembly according to claim 9,
**characterized in that**
the compressor unit (12) has a variable-speed compressor device (14) and/or a recirculation line means (16).

11. Micro turbine assembly according to claim 10,
**characterized in that**
two partial lines (40, 41) are present in the fuel supply line (10), each of which can be connected to a different fuel source and which each have a compressor unit (12, 12'), the partial lines (40, 41) being combined upstream of the combustion chamber system (30).

12. Micro turbine assembly according to claim 11,
**characterized in that**
the compressor unit (12) having the variable-speed compressor device (14) is provided in the first partial line (40) and a further compressor unit (12') for operating at constant speed is provided in the second partial line (41).

13. Micro turbine assembly according to claim 12,
**characterized in that**
the first partial line (40) opens into a line portion (22') of the pilot stage and/or into a line portion (21') of the main stage of the second partial line (41).

## Revendications

1. Procédé de fonctionnement d'un agencement de microturbine à gaz, dans lequel du combustible sous forme de gaz combustible est acheminé vers un système de chambre de combustion (30) par l'intermédiaire d'un cordon d'alimentation en combustible (10),
- le flux de combustible étant comprimé en amont du système de chambre de combustion (30) à l'aide d'un dispositif compresseur (14, 14') d'une unité de compresseur (12, 12') à une pression d'alimentation et étant réparti en aval de l'unité de compresseur (12, 12'), dans une section spécifique au brûleur (20, 20') sur deux sections de conduite (21, 21', 22, 22'), pour l'alimentation en combustible séparée d'un étage principal et d'un étage pilote du système de chambre de combustion (30) et, après la répartition, le combustible s'écoulant à travers au moins un moyen de réduction en section transversale (210, 411) disposé dans la section spécifique au brûleur (20, 20'),
- le flux de combustible à travers la section de conduite (22, 22') de l'étage pilote étant commandé ou régulé à l'aide de l'au moins un moyen de réduction en section transversale en fonction du flux de combustible à travers la section de conduite (21, 21') de l'étage principal,
- le flux de combustible à travers la section de conduite (22, 22') de l'étage pilote étant commandé ou régulé en fonction d'un rapport prédéfini par rapport au flux de combustible à travers la section de conduite (21) de l'étage principal et
- pour la commande ou la régulation du flux de combustible, le rapport entre le flux de combustible de l'étage pilote et le flux de combustible de l'étage principal étant déterminé dans une unité de détermination (53, 53') au moins en fonction d'une température de sortie de turbine en aval d'un agencement de turbine (60, 60') de l'agencement de microturbine à gaz et d'une vitesse de rotation de turbine de l'agencement de turbine (60, 60') et ensuite, en tenant compte du rapport, une position d'ouverture du moyen de réduction en section transversale étant déterminée dans l'unité de détermination (53, 53') et étant prédéfinie pour le moyen de réduction en section transversale.

2. Procédé selon la revendication 1,
**caractérisé en ce que**
le combustible est comprimé dans l'unité de compresseur (12) par un dispositif compresseur (14) à vitesse de rotation régulable et
que le flux de combustible total est commandé ou régulé par l'intermédiaire de la variation de la vitesse de rotation.

3. Procédé selon la revendication 2,
**caractérisé en ce que**
le combustible est conduit dans la section spécifique au brûleur (20, 20') uniquement dans l'une des sections de conduite (21, 22) par le moyen de réduction en section transversale, en particulier sous la forme d'un dispositif d'étranglement (210, 210').

4. Procédé selon l'une des revendications 2 ou 3,
**caractérisé en ce que**
le rapport est commandé ou régulé par la commande ou la régulation du moyen de réduction en section transversale en tenant compte de la vitesse de rotation du dispositif compresseur (14).

5. Procédé selon la revendication 3 ou 4,
**caractérisé en ce que**
le combustible est conduit dans la section de conduite (21) de l'étage principal par le moyen de réduction en section transversale.

6. Procédé selon la revendication 1 ou 2,
**caractérisé en ce que**
le combustible est conduit dans les deux sections de conduite (21, 21', 22, 22') par respectivement un moyen de réduction en section transversale sous la forme d'un moyen formant soupape (410, 411), et
que, pour le réglage du rapport prédéfini, un rapport de fermeture des moyens formant soupape (410, 411) est réglé, les caractéristiques de soupape respectives étant intégrées pour le réglage du rapport de fermeture.

7. Procédé selon la revendication 6,
**caractérisé en ce que**
le flux de combustible de l'étage pilote est supérieur ou égal à un flux de combustible minimal, lors de la commande ou de la régulation du flux de combustible de l'étage pilote, le flux de combustible étant comparé au flux de combustible minimal en fonction du flux de combustible de l'étage principal et la valeur supérieure étant acheminée vers le moyen de réduction en section transversale dans la section de conduite (22, 22') de l'étage pilote.

8. Procédé selon la revendication 7,
**caractérisé en ce que**
le flux de combustible minimal est déterminé dans l'unité de détermination (53, 53') au moins en fonction de la température de sortie de turbine et de la vitesse de rotation à partir d'une courbe caractéristique acheminée comme grandeur d'entrée ou enregistrée dans l'unité de détermination (53, 53').

9. Agencement de microturbine à gaz comportant un système de chambre de combustion (30),
comportant un cordon d'alimentation en combustible (10) permettant d'alimenter le système de chambre de combustion (30) en combustible, le cordon d'alimentation en combustible (10) comprenant des moyens de conduite (11) permettant la liaison par écoulement de composants, une unité de compresseur (12) comportant un dispositif compresseur (14) et une section spécifique au brûleur (20, 20') disposée en aval de l'unité de compresseur (12) et dans laquelle les moyens de conduite (11) sont séparés en deux sections de conduite (21, 22) pour l'alimentation en combustible séparée d'un étage principal et d'un étage pilote du système de chambre de combustion (30) et, après la séparation, le combustible s'écoulant à travers au moins un moyen de réduction en section transversale (210, 411) disposé dans la section spécifique au brûleur, et un dispositif de commande comportant une unité de détermination (53, 53'), le dispositif de commande étant configuré pour mettre en oeuvre le procédé selon l'une des revendications 1 à 8.

10. Agencement de microturbine à gaz selon la revendication 9,
**caractérisé en ce que**
l'unité de compresseur (12) présente un dispositif compresseur (14) à vitesse de rotation régulable et/ou un moyen de conduite de retour (16).

11. Agencement de microturbine à gaz selon la revendication 10,
**caractérisé en ce que**
deux cordons partiels (40, 41) sont prévus dans le cordon d'alimentation en combustible (10), lesquels cordons partiels peuvent être respectivement raccordés à une source de combustible différente et présentent respectivement une unité de compresseur (12, 12'), les cordons partiels (40, 41) étant fusionnés en amont du système de chambre de combustion (30).

12. Agencement de microturbine à gaz selon la revendication 11,
**caractérisé en ce que**
l'unité de compresseur (12) comportant le dispositif compresseur (14) à vitesse de rotation régulable est prévue dans le premier cordon partiel (40) et une autre unité de compresseur (12') destinée à fonctionner à une vitesse de rotation constante est prévue dans le second cordon partiel (41).

13. Agencement de microturbine à gaz selon la revendication 12,
**caractérisé en ce que**
le premier cordon partiel (40) débouche dans une section de conduite (22') de l'étage pilote et/ou dans une section de conduite (21') de l'étage principal du second cordon partiel (41).
